# EUROPÄISCHE PATENTANMELDUNG

(11) **EP 0 855 713 A1**
(43) Veröffentlichungstag der Anmeldung: **29.07.1998**
(21) Anmeldenummer: 98100646.3
(22) Anmeldetag: 15.01.1998
(51) Int. Cl.: G11B 23/40, B65C 1/02

(54) **Vorrichtung und Verfahren zum Aufbringen von Etiketten auf Compact-Discs**

(30) Priorität: 24.01.1997 DE 19702546
(71) Anmelder: boeder Deutschland GmbH, 65439 Flörsheim/Main (DE)
(72) Erfinder: Weinbach-Jackel, Frank, 65719 Hofheim-Wildsachsen (DE); Kötterheinrich, Reinhard, 65197 Wiesbaden (DE)
(74) Vertreter: Preissner, Nicolaus, Dipl.-Ing.

(57) **Zusammenfassung**

Es wird eine Vorrichtung zum Aufbringen von Etiketten (60) auf Compact-Discs (50) beschrieben mit einer Hülle (20), die ein Aufnahmeelement (21) mit einem Befestigungselement (22) und ein Deckelelement (23) aufweist, wobei das Deckelelement (23) schwenkbeweglich an dem Aufnahmeelement (21) angeordnet ist. Weiterhin ist ein Trägerelement (30) für Etiketten (60) vorgesehen, das eine Haftschicht (31) zum zeitweiligen Fixieren der Etiketten (60) aufweist. Das Trägerelement (30) ist über wenigstens ein Haftelement (40) an der Innenseite (24) des Deckelelements (23) fixiert. Zusätzlich wird ein Verfahren zur Herstellung einer solchen Vorrichtung sowie ein Verfahren zum Aufbringen von Etiketten (60) auf einer Compact-Disc (50) beschrieben.

## Beschreibung

Die vorliegende Erfindung betrifft eine Vorrichtung und ein Verfahren zum Aufbringen von Etiketten auf Compact-Discs. Weiterhin betrifft die Erfindung ein Verfahren zur Herstellung einer solchen Vorrichtung.

Vorrichtungen zum Aufbringen von Etiketten auf Compact-Discs sind bereits bekannt. Gemäß einer bekannten Vorrichtung werden die Etiketten von einem Tägermaterial abgezogen und mit der Klebeseite nach oben auf die Oberfläche einer Zentrierhilfe gelegt. In der Mitte der Zentrierhilfe befindet sich ein Loch zur Aufnahme eines Zentrierstifts. Auf diesen Zentrierstift wird eine Compact-Disc mit der zu beklebenden Seite nach unten aufgesteckt. Anschließend wird der Zentrierstift in das Loch der Zentrierhilfe eingeführt, so daß das Etikett an der Compact-Disc anklebt. Nachteilig bei dieser Vorrichtung ist, daß der Zentrierstift im Loch der Zentrierhilfe relativ viel Spiel hat und somit schräg eingeführt werden kann. Eine genaue Zentrierung des Etiketts auf der Compact-Disc ist deshalb nicht möglich.

In einer weiteren bekannten Vorrichtung ist die Zentrierhilfe mit dem Zentrierstift in enger Führung fest miteinander verbunden, so daß sich die zu etikettierende Compact-Disc immer gerade herunterdrücken läßt.

Bei dieser Vorrichtung weist die Zentrierhilfe zusätzlich einen Andruckteller auf, mit dem sich die Compact-Disc auf das entsprechende Etikett aufdrücken läßt. Die Verwendung eines solchen Andrucktellers hat jedoch den Nachteil, daß Kratzer oder andere Beschädigungen auf die Compact-Disc übertragen werden können, wenn der Andruckteller im Moment des Etikettierens gedreht wird. Außerdem können in Folge häufiger Applizierungen Klebereste, welche sich am Dorn absetzen, auf die Compact-Disc übertragen werden und sich anschließend im Laufwerk absetzen.

Ausgehend vom genannten Stand der Technik liegt der vorliegenden Erfindung die Aufgabe zugrunde, eine Vorrichtung der genannten Art derart weiterzubilden, daß die im Stand der Technik genannten Nachteile vermieden werden. Ferner soll ein Verfahren geschaffen werden, mit dem ein Etikettieren von Compact-Discs auf einfache und kostengünstige Weise möglich ist, bei gleichzeitiger Gewährleistung eines ackuraten und beschädigungsfreien Aufbringens des Etiketts auf der Compact-Disc ohne die zuvor erwähnte Klebstoffübertragung.

Gemäß einem ersten Aspekt der vorliegenden Erfindung wird die Aufgabe gelöst durch eine Vorrichtung zum Aufbringen von Etiketten auf Compact-Discs, mit einer Hülle, die ein Aufnahmeelement mit einem Befestigungselement und ein Deckelelement aufweist, wobei das Deckelelement schwenkbeweglich an dem Aufnahmeelement angeordnet ist, einem Trägerelement für Etiketten, das eine Haftschicht zum zeitweiligen Fixieren der Etiketten aufweist und mit wenigstens einem Haftelement zum Fixieren des Trägerelements an der Hülle.

Im Rahmen der vorliegenden Erfindung ist unter einem Etikett jede Form von Informationsträger zu verstehen, der entweder bereits bedruckt oder beschriftet ist und/oder noch beschriftet oder bedruckt werden kann. Die auf die Compact-Disc aufzubringende Seite des Etiketts weist eine Klebeschicht oder dergleichen auf. Die erfindungsgemäß verwendeten Etiketten bestehen vorteilhaft aus Materialien auf Papier- oder Kunststoffbasis oder Verbundmaterialien.

Der allgemeine Begriff Compact-Disc umfaßt neben den mit Musik oder Sprache bespielten Compact-Discs auch CD-ROMs, CD-R's und dergleichen.

Durch die erfindungsgemäße Vorrichtung können Etiketten genau zentriert auf einer Compact-Disc aufgebracht werden. Weiterhin wird durch die erfindungsgemäße Vorrichtung eine mögliche Beschädigung der Compact-Disc während des Etikettierens vermieden. Die Applikation des Etiketts erfolgt ohne Zuhilfenahme der menschlichen Hand oder sonstiger Hilfsmittel.

Die Etiketten, die in der Regel eine Dicke von etwa 0,15 mm bis 0,4 mm aufweisen, können auf einfache und sichere Weise auf der Compact-Disc aufgebracht werden. Durch die erfindungsgemäß vorgesehene Haftschicht zum zeitweiligen Fixieren der Etiketten auf dem Trägerelement wird vermieden, daß sich die Etiketten beispielsweise während der Applikation wölben und damit in sich verkleben und unbrauchbar werden können. Durch die erfindungsgemäß vorgesehe Haftschicht werden weiterhin die Etiketten während des Etikettiervorgangs geradlinig und gestrafft auf dem Trägerelement der Vorrichtung gehalten.

Erfindungsgemäß kann die Haftschicht aus jedem beliebigen Material bestehen, das ein zeitweiliges, nicht permanentes Anhaften der Etiketten gewährleistet. Dabei ist insbesondere darauf zu achten, daß die Klebefähigkeit der Haftschicht ausreichend groß ist, um das Etikett bis zum eigentlichen Etikettiervorgang in einer genau definierten Position zu halten. Auf der anderen Seite muß die Klebwirkung der Haftschicht so gering sein, daß sich das Etikett nach dem Aufbringen auf der Compact-Disc von der Haftschicht loslösen kann, ohne daß es zu Beschädigungen auf der als Informationsträger ausgebildeten Seite des Etiketts kommt.

Gemäß einer bevorzugten Ausführungsform der Erfindung ist das Trägerelement als Compact-Disc ausgebildet. Auf diese Weise kann als Trägerelement ein Rohling einer handelsüblichen Compact-Disc verwendet werden. Durch die Ausgestaltung des Trägerelements in einer Form, die zu der zu etikettierenden Compact-Disc korrespondiert, können die Etiketten gleichmäßig auf der Compact-Disc aufgebracht werden, so daß die Compact-Disc bei der späteren Verwendung fehlerfrei läuft. Insbesondere müssen die Etiketten derart auf der Compact-Disc aufgebracht werden, daß keine unzulässigen Unwuchten beim Abspielen der Compact-Disc entstehen. Aus dem gleichen Grund ist es auch besonders wichtig, daß die Etiketten genau zentriert auf der Compact-Disc aufgebracht werden. Bereits bei kleinen Unwuchten wird nämlich das Laufverhalten der Compact-Discs in den entsprechenden Abspielgeräten beeinträchtigt. Dies kann nicht zuletzt zu fehlerhaften Übertragungen von den auf der Compact-Disc gespeicherten Daten führen.

In vorteilhafter Ausgestaltung der Erfindung kann die Haftschicht zum zeitweiligen Fixieren der Etiketten im wesentlichen auf der gesamten oder teilweisen Oberfläche des Trägerelements ausgebildet sein. Dadurch wird die gleichmäßige Haftung der Etiketten auf der Haftschicht des Trägerelements weiter verbessert.

Erfindungsgemäß kann die Haftschicht zum zeitweiligen Fixieren der Etiketten weiterhin in ihrem äußeren und/oder inneren Randbereich eine Markierung aufweisen. Diese Markierung kann beispielsweise als durchgehender farbiger Strich ausgebildet sein. Es ist jedoch auch denkbar, daß die Markierung auf der Haftschicht nur lokal ausgebildet ist. In jedem Fall dient die Markierung dem Zweck, das Zentrieren der Etiketten auf der Haftschicht zu erleichtern. Deshalb ist jede Art von Markierung möglich, die diesen Zweck erfüllt.

In weiterer Ausgestaltung der Erfindung ist das Trägerelement auf der Innenseite des Deckelelements fixiert.

Vorteilhaft kann das Trägerelement lösbar an der Hülle fixiert sein. Dadurch ist es möglich, daß das Trägerelement aus der Vorrichtung entnommen und beispielsweise durch ein neues ersetzt werden kann, wenn die Klebwirkung der Haftschicht auf dem Trägerelement nachläßt. Somit muß bei Verschleiß der Haftschicht nur ein geringer Teil der Vorrichtung ausgetauscht werden, was zu einer weiteren Kostenreduktion führt.

In vorteilhafter Ausgestaltung der Erfindung ist das Haftelement als Klebemittel und/oder Klettverschluß oder als anderes flexibles Element ausgebildet. Das Haftelement hat die Funktion, das Trägerelement sicher und rutschfrei und in Grenzen ausgleichend an der Hülle zu fixieren. Besonders geeignet für eine solche Fixierung sind Klettverschlüsse, vorzugsweise mit rückseitigen Klebestreifen. Über die Klebestreifen werden die Klettverschlußteile jeweils auf dem Trägerelement und an der Hülle befestigt. Es ist auch denkbar, daß Haftelement nur in Form von doppelseitigen Klebepunkten auszubilden.

In weiterer Ausgestaltung der Erfindung ist das Befestigungselement ein Spreiz-Klemmelement.

Vorteilhaft besteht die Hülle aus Kunststoff.

Die erfindungsgemäße Vorrichtung ist kostengünstig herstellbar und läßt eine genaue Zentrierung der Etiketten auf der Compact-Disc zu. Als Hülle kann beispielsweise eine handelsübliche CD-Leerhülle (Jewel-Case) verwendet werden. Die zu verwendenden Etiketten können beispielsweise auf Druckbögen gestanzt werden. Dadurch sind mehrere Etiketten pro Druckbogen, beispielsweise einem DIN-A-4-Druckbogen, erhältlich. Die Etiketten können somit über entsprechende Software zunächst an einem Computer entworfen und anschließend in einem Drucker bedruckt werden, bevor sie auf die Compact-Disc aufgebracht werden.

Gemäß einem weiteren Aspekt der vorliegenden Erfidnung wird ein Verfahren zur Herstellung einer Vorrichtung zum Aufbringen von Etiketten auf Compact-Discs bereitgestellt, das durch die nachfolgenden Schritte gekennzeichnet ist: a) Einbringen eines Trägerelements in eine Hülle, die ein Aufnahmeelement und ein an diesem schwenkbeweglich gelagertes Deckelelement aufweist, derart, daß das Trägerelement über ein Befestigungselement lösbar in dem Aufnahmeelement gehalten wird; b) Aufbringen von wenigstens einem Haftelement auf der freiliegenden Oberfläche des Trägerelements; c) Schließen des Deckelelements der Hülle zum Anpressen der Innenseite des Deckelelements gegen das auf dem Trägerelement angeordnete Haftelement; und d) Öffnen des Deckelelements nach Beendigung des Schließvorgangs, wobei das Trägerelement über das wenigstens eine Haftelement an der Innenseite des Deckelelements fixiert ist.

Durch das erfindungsgemäße Verfahren kann auf einfache und günstige Weise die vorbeschriebene erfindungsgemäße Vorrichtung mit all ihren Vorteilen hergestellt werden. An dieser Stelle wird auf die vorstehend genannten vorteilhaften Funktionen, Wirkungen und Effekte der erfindungsgemäßen Vorrichtung ausdrücklich Bezug genommen.

In vorteilhafter Ausgestaltung des Verfahens wird vor dem Einbringen des Trägerelements in die Hülle eine Haftschicht zum zeitweiligen Fixieren von Etiketten auf dem Trägerelement aufgebracht. Auf diese Weise kann das Trägerelement zunächst separat fertiggestellt und anschließend auf einfache Weise selbstzentrierend in die Hülle eingebracht werden. Dies führt zu Kosteneinsparungen.

Gemäß einer weiteren Ausführungsform des erfindungsgemäßen Verfahrens wird nach der Fixierung des Trägerelements an der Innenseite des Deckelelements eine Haftschicht zum zeitweiligen Fixieren von Etiketten auf dem Trägerelement aufgebracht, beispielsweise in Form eines fertig vorbeschichteten Trägers.

Zum Zeitpunkt des Nachlassens der Klebwirkung der Haftschicht kann der Austausch des gesamten Trägerelements oder der Haftschicht vorgenommen werden.

Vorteilhaft kann die Haftschicht mit einer Schutzschicht abgedeckt sein. Die Schutzschicht, die beispielsweise aus Papier bestehen kann, wird in dem Moment abgezogen, wo die Vorrichtung zum Etikettieren der Compact-Discs zum ersten Mal Verwendung findet. Auf diese Weise bleibt die Haftschicht bis zum Zeitpunkt des ersten Gebrauchs vor äußeren Einflüssen, die zu einer Reduktion der Klebwirkung führen können, geschützt. Die Schutzschicht bietet weiterhin Raum für zusätzliche Informationen wie beispielsweise eine Gebrauchsanleitung.

In weiterer Ausgestaltung des erfindungsgemäßen Verfahrens kann die Fixierung des Trägerelements an der Innenseite des Deckelelements lösbar sein.

Vorteilhaft erfolgt die Fixierung des Trägerelements an der Innenseite des Deckelelements mittels Kleben und/oder einem Klettverschluß.

Gemäß einem dritten Aspekt der vorliegenden Erfindung wird ein Verfahren zum Aufbringen von Etiketten auf einer Compact-Disc bereitgestellt, das durch die folgenden Schritte gekennzeichnet ist: a) Öffnen des Deckelelements einer Hülle, das schwenkbeweglich an einem Aufnahmeelement der Hülle gelagert ist und auf dessen Innenseite ein mit einer Haftschicht zum zeitweiligen Fixieren von Etiketten versehenes Trägerelement fixiert ist; b) Aufbringen eines Etiketts auf die Haftschicht des Trägerelements; c) Einbringen einer zu etikettierenden Compact-Disc in das Aufnahmeelement der Hülle; d) Schließen des Deckelelements, so daß das Etikett vom Trägerelement auf die Compact-Disc übertragen wird; und e) Öffnen des Deckelelements und Entnahme der etikettierten Compact-Disc aus dem Aufnahmeelement.

Die Vorteile des erfindungsgemäßen Verfahrens entsprechen wiederum den Vorteilen, Wirkungen und Effekten der vorstehend beschriebenen erfindungsgemäßen Vorrichtung, auf die hiermit ausdrücklich Bezug genommen wird.

In vorteilhafter Ausgestaltung der beiden vorstehend beschriebenen erfindungsgemäßen Verfahren wird als Trägerelement eine Compact-Disc verwendet.

Erfindungsgemäß kann die Haftschicht zum zeitweiligen Fixieren der Etiketten im wesentlichen auf der gesamten Oberfläche oder in Teilbereichen der jeweiligen Etikettengröße des Trägerelements ausgebildet sein.

Vorteilhaft weist die Haftschicht zum zeitweiligen Fixieren der Etiketten in ihrem äußeren und/oder inneren Randbereich eine Markierung auf.

Vorzugsweise kann das Befestigungselment im Aufnahmeelement als Spreiz-Klemmelement ausgebildet sein.

Die Erfindung wird nun anhand von Ausführungsbeispielen näher beschrieben, die in der Zeichnung schematisch dargestellt sind. Es zeigen:
- Figur 1: eine schematische Darstellung der einzelnen Elemente der erfindungsgemäßen Vorrichtung;
- Figur 2: in schematischer Darstellung das Einlegen des Trägerelements in die Hülle;
- Figur 3: in schematischer Darstellung das Schließen der Hülle nach dem Einbringen des Trägerelements;
- Figuren 4a und 4b: in schematischer Darstellung die geschlossene Hülle sowie die Hülle nach erneuter Öffnung, wobei das Trägerelement am Deckelelement der Hülle fixiert ist;
- Figur 5: die geöffnete Hülle gemäß Figur 4b, in die eine zu etikettierende Compact-Disc eingebracht wird;
- Figur 6: eine Hülle gemäß Figur 5, bei der ein Etikett auf die Haftschicht des Trägerelements aufgebracht wird;
- Figuren 7a und 7b: in schematischer Darstellung das Schließen der Hülle, wodurch das Etikett auf die Compact-Disc übertragen wird; und
- Figur 8: die fertig etikettierte Compact-Disc nach der Entnahme aus der Hülle.

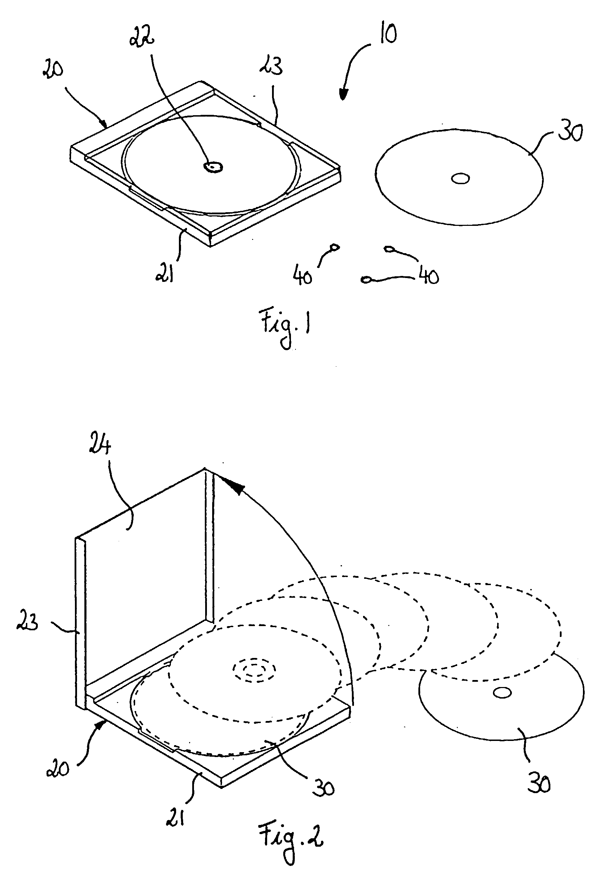

Wie aus Figur 1 ersichtlich ist, besteht eine Vorrichtung 10 zum Aufbringen von Etiketten auf Compact-Discs aus einer Hülle 20, einem Trägerelement 30 sowie drei Haftelementen 40. Die Anzahl der Haftelemente 40 ist nicht festgelegt und kann je nach Anwendungserfordernis variiert werden. Die Hülle 20 weist ein Deckelelement 23 auf, das schwenkbeweglich an einem Aufnahmeelement 21 angelenkt ist. Innerhalb des Aufnahmeelements 21 ist weiterhin ein Befestigungselement (22) vorgesehen, das in Form eines Spreiz-Klemmelements ausgebildet ist. Bei der Hülle 20 handelt es sich um eine handelsübliche Compact-Disc-Hülle.

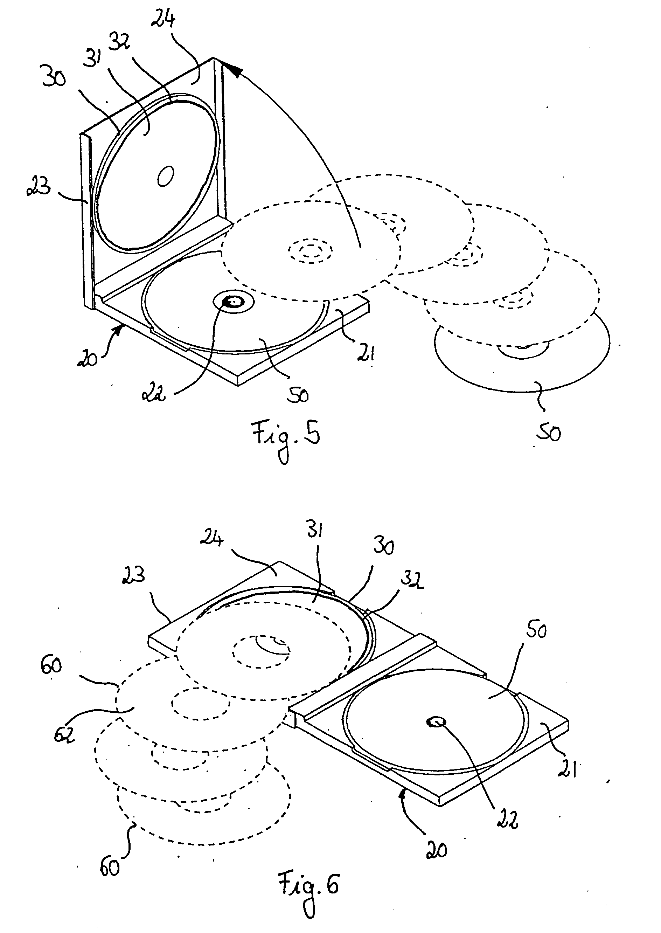

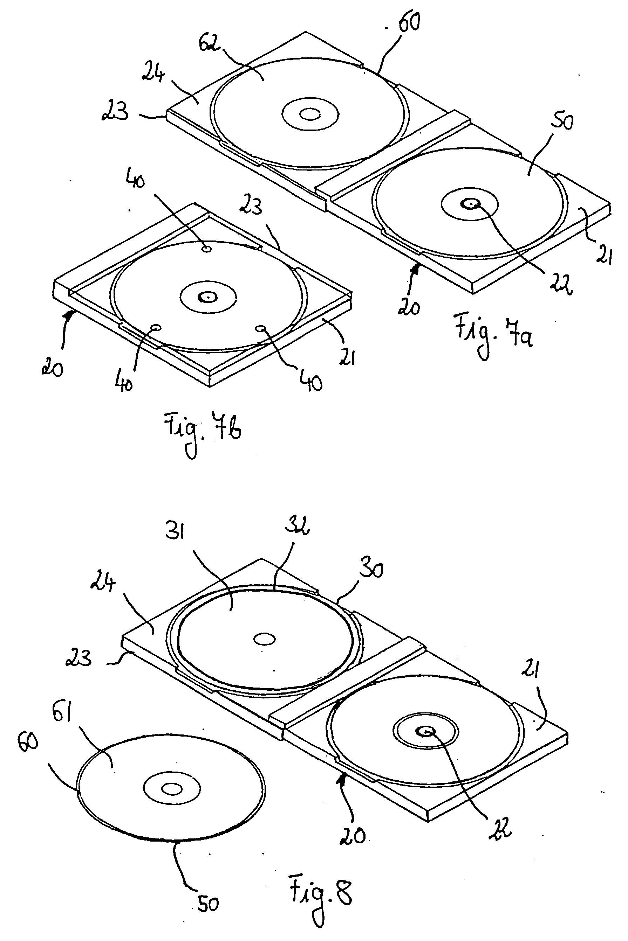

Wie sich weiterhin aus den Figuren 5 und 6 ergibt, weist das Trägerelement 30 auf einer Seite eine Haftschicht 31 auf, die zusätzlich mit einem Markierungsstreifen 32 versehen ist. Das Trägerelement 30 ist in Form einer Compact-Disc ausgebildet.

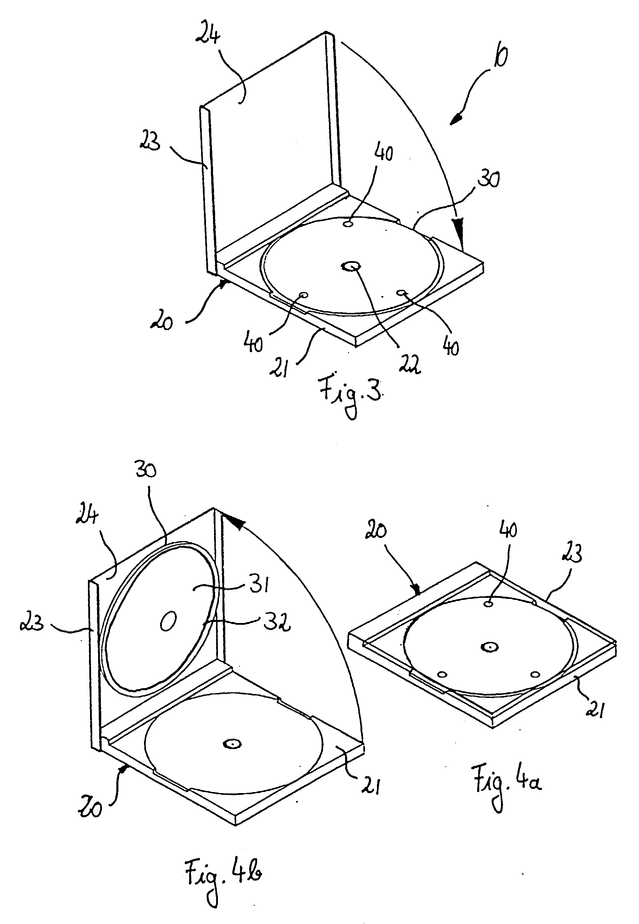

Wie sich insbesondere aus den Figuren 2 und 5 ergibt, ist das Aufnahmeelement 21 mit dem Spreiz-Klemmelement 22 sowohl zur Aufnahme des Trägerelements 30 als auch zur Aufnahme einer zu etikettierenden Compact-Disc 50 geeignet, die hier als Compact-Disc vorliegt.

Auf der Haftschicht 31 des Trägerelements 30 ist ein Etikett 60 aufbringbar, das mit seiner Klebeseite 62 auf die zu etikettierende Compact-Disc 50 aufgeklebt werden soll.

Nachfolgend wird nun der Zusammenbau der Vorrichtung 10 zum Aufbringen von Etiketten 60 auf Compact-Discs 50 sowie die Funktionsweise der erfindungsgemäßen Vorrichtung 10 beschrieben.

Gemäß Figur 2 wird zunächst die Hülle 20 geöffnet, so daß das Trägerelement 30 in das Aufnahmeelement 21 eingebracht werden kann. Das Einbringen des Trägerelements 30 ist durch die gestrichelte Abfolge von Darstellungen der Trägerelemente veranschaulicht. Das Trägerelement 30 ist in Form einer handelsüblichen Compact-Disc ausgebildet und auf diese Weise auf einfache und kostengünstige Weise herstellbar. Da das Trägerelement 30 nicht als Datenträger verwendet wird, kann ein Rohling einer CD-Scheibe verwendet werden. Wie aus Figur 4b ersichtlich ist, weist das Trägerelement 30 an seiner untenliegenden Seite, d.h. diejenige Seite, die zum Aufnahmeelement 21 hin ausgerichtet ist, eine Haftschicht 31 auf.

Wie in Figur 3 dargestellt ist, werden nach dem Einbringen des Trägerelements 30 in das Aufnahmeelement 21 der Hülle 20 drei Haftelemente 40 auf dem Trägerelement 30 aufgebracht. Die Haftelemente 40 haben die Form von Klettverschlüssen, die an ihren Außenseiten jeweils mit einer Klebeschicht versehen sind. Nach dem Aufkleben der Haftelemente 40 auf das Trägerelement 30 wird das Deckelelement 23 der Hülle 20 derart geschlossen, daß die obenliegenden Klebeschichten der Haftelemente 40 gegen die Innenseite 24 des Deckelelements 23 gepreßt werden (siehe auch Figur 4a).

Anschließend wird die Hülle 20 durch Aufklappen des Deckelelements 23 erneut geöffnet, wie dies in Figur 4b dargestellt ist. Das Trägerelement 30 mit seiner Haftschicht 31 befindet sich nun an der Innenseite 24 des Deckelelements 23 und damit in seiner Funktionsposition. Die Haftschicht 31 dient zum zeitweiligen Fixieren von Etiketten 60 und besteht deshalb aus einem Material, das eine ausreichende Klebwirkung aufweist, um die Etiketten bis zum eigentlichen Etikettiervorgang sicher und rutschfest auf dem Trägerelement 30 zu halten. Auf der anderen Seite ist die Klebwirkung der Haftschicht 31 jedoch so gering, daß eine Übertragung des Etiketts 60 vom Trägerelement 30 auf eine Compact-Disc 50 möglich ist, ohne daß es zu Beschädigungen auf der als Informationsträger dienenden Seite des Etiketts 60 kommt.

Die Vorrichtung 10 zum Aufbringen von Etiketten 60 auf Compact-Discs 50 ist nun funktionsbereit. In den Figuren 5 bis 8 wird die Funktionsweise der Vorrichtung 10 beschrieben.

Nach dem erneuten Öffnen der Hülle 20 wird eine zu etikettierende Compact-Disc 50 in das Aufnahmeelement 21 und über das Spreiz-Klemmelement 22 gehalten, eingebracht. Das Einbringen der Compact-Disc 50 ist durch die gestrichelte Abfolge von Darstellungen der Compact-Disc 50 veranschaulicht.

Nach dem Einbringen der zu etikettierenden Compact-Disc 50 in das Aufnahmeelement 21 wird gemäß Figur 6 ein Etikett 60 auf dem Trägerelement 30 im Deckelelement 23 aufgebracht. Dabei ist die Seite des Etiketts 60, die als Informationsträger dient, zur Haftschicht 31 des Trägerelements 30 hin ausgerichtet, während die Klebeseite 62 des Etiketts 60 nach oben hin freiliegt. Zur genauen Zentrierung des Etiketts 60 auf dem Trägerelement 30 dient eine Markierung 32, die als kontinuierlich rundlaufender Markierungsstrich ausgebildet ist. In vorteilhafter Weise ist der Markierungsstrich farbig, vorzugsweise in einer Signalfarbe ausgebildet. Das Etikett 60 wird mit seiner als Informationsträger dienenden Seite leicht auf die Haftschicht 31 aufgedrückt, so daß es durch die Klebwirkung der Haftschicht 31 sicher und rutschfest an dieser gehalten wird.

Wie aus den Figuren 7a und 7b ersichtlich ist, wird nach der erfolgten Positionierung und Zentrierung des Etiketts 60 die Hülle 20 erneut geschlossen, indem das Aufnahmeelement 21 und das Deckelelement 23 zusammengeführt werden. Auf diese Weise wird das Etikett 60 mit seiner Klebeseite 62 auf die Oberseite der in dem Aufnahmeelement 21 befindlichen zu etikettierenden Compact-Disc 50 aufgedrückt. Durch das Schließen der Hülle 20 wird das Etikett 60 auf die zu etikettierende Compact-Disc 50 übertragen. Die Übertragungswirkung kann durch Ausüben von äußerem Druck, beispielsweise durch die Finger des Benutzers auf das Deckelelement 23 bzw. das Aufnahmeelement 21 erhöht werden.

Nach Beendigung des Übertragungsvorgangs wird gemäß Figur 8 die Hülle 20 erneut geöffnet, so daß die mit dem Etikett 60 versehene Compact-Disc 50 aus dem Aufnahmeelement 21 entnommen werden kann. Die als Informationsträger dienende Seite 61 des Etiketts 60 liegt gut sichtbar auf der Compact-Disc 50 auf.

Zum Etikettieren weiterer Compact-Discs kann nunmehr ein neues Etikett 60 auf der Haftschicht 31 des Trägerelements 30 aufgebracht und eine weitere Compact-Disc in das Aufnahmeelement 21 eingebracht werden. Wenn nach mehreren Etikettiervorgängen die Klebwirkung der Haftschicht 31 nachläßt, kann das Trägerelement 30 auf Grund der in Form von Klettverschlüssen 40 verwendeten Haftelemente von der Innenseite 24 des Deckelelements 23 abgezogen und gemäß den vorstehend beschriebenen Schritten durch ein neues Trägerelement 30 ersetzt werden.

## Patentansprüche

1. Vorrichtung zum Aufbringen von Etiketten auf Compact-Discs, mit einer Hülle (20), die ein Aufnahmeelement (21) mit einem Befestigungselement (22) und ein Deckelelement (23) aufweist, wobei das Deckelelement (23) schwenkbeweglich an dem Aufnahmeelement (21) angeordnet ist, einem Trägerelement (30) für Etiketten (60), das eine Haftschicht (31) zum zeitweiligen Fixieren der Etiketten (60) aufweist und mit wenigstens einem Haftelement (40) zum Fixieren des Trägerelements (30) an der Hülle (20).

2. Vorrichtung nach Anspruch 1, dadurch gekennzeichnet, daß das Trägerelement (30) als Compact-Disc oder in Form einer anderen runden Scheibe ausgebildet ist.

3. Vorrichtung nach Anspruch 1 oder 2, dadurch gekennzeichnet, daß das Trägerelement (30) auf der Innenseite (24) des Deckelelements (23) fixiert ist.

4. Vorrichtung nach einem der Ansprüche 1 bis 3, dadurch gekennzeichnet, daß die Haftschicht (31) zum zeitweiligen Fixieren der Etiketten (60) im wesentlichen auf der gesamten Oberfläche oder in Teilbereichen des Trägerelements (30) ausgebildet ist.

5. Vorrichtung nach einem der Ansprüche 1 bis 4, dadurch gekennzeichnet, daß die Haftschicht (31) zum zeitweiligen Fixieren der Etiketten (60) in ihrem äußeren und/oder inneren Randbereich eine Markierung (32) aufweist.

6. Vorrichtung nach einem der Ansprüche 1 bis 5, dadurch gekennzeichnet, daß das Trägerelement (30) lösbar an der Hülle (20) fixiert ist.

7. Vorrichtung nach einem der Ansprüche 1 bis 6, dadurch gekennzeichnet, daß das Haftelement (40) als Klebemittel und/oder Klettverschluß ausgebildet ist.

8. Vorrichtung nach einem der Ansprüche 1 bis 7, dadurch gekennzeichnet, daß das Befestigungselement (22) ein Spreiz-Klemmelement ist.

9. Vorrichtung nach einem der Ansprüche 1 bis 8, dadurch gekennzeichnet, daß die Hülle (20) aus Kunststoff besteht.

10. Verfahren zur Herstellung einer Vorrichtung zum Aufbringen von Etiketten (60) auf Compact-Discs, insbesondere nach einem der Ansprüche 1 bis 9, gekennzeichnet durch folgende Schritte:
a) Einbringen eines Trägerelements (30) in eine Hülle (20), die ein Aufnahmeelement (21) und ein an diesem schwenkbeweglich gelagertes Deckelelement (23) aufweist, derart, daß das Trägerelement (30) mittels eines Befestigungselements (22) lösbar in dem Aufnahmeelement (21) gehalten wird;
b) Aufbringen von wenigstens einem Haftelement (40) auf der freiliegenden Oberfläche des Trägerelements (30);
c) Schließen des Deckelelements (23) der Hülle (20) zum Anpressen der Innenseite (24) des Deckelelements (23) gegen das auf dem Trägerelement (30) angeordnete Haftelement (40); und
d) Öffnen des Deckelelements (23) nach Beendigung des Schließvorgangs, wobei das Trägerelement (30) über das wenigstens eine Haftelement (40) an der Innenseite (24) des Deckelelements (23) fixiert ist.

11. Verfahren nach Anspruch 10, dadurch gekennzeichnet, daß vor dem Einbringen des Trägerelements (30) in die Hülle (20) eine Haftschicht (31) zum zeitweiligen Fixieren von Etiketten (60) auf dem Trägerelement (30) aufgebracht wird.

12. Verfahren nach Anspruch 10, dadurch gekennzeichnet, daß nach der Fixierung des Trägerelements (30) an der Innenseite (24) des Deckelelements (23) eine Haftschicht (31) zum zeitweiligen Fixieren von Etiketten (60) auf dem Trägerlement (30) aufgebracht wird.

13. Verfahren nach Anspruch 11 oder 12, dadurch gekennzeichent, daß die Haftschicht (31) mit einer Schutzschicht abgedeckt ist.

14. Verfahren nach einem der Ansprüche 10 bis 13, dadurch gekennzeichnet, daß die Fixierung des Trägerelements (30) an der Innenseite des Deckelelements (23) lösbar ist.

15. Verfahren nach einem der Ansprüche 10 bis 14, dadurch gekennzeichnet, daß die Fixierung des Trägerelements (30) an der Innenseite (24) des Deckelelements (23) mittels Kleben und/oder einem Klettverschluß erfolgt.

16. Verfahren zum Aufbringen von Etiketten auf eine Compact-Disc, insbesondere unter Verwendung einer Vorrichtung nach einem der Ansprüche 1 bis 9, gekennzeichnet durch folgende Schritte:
a) Öffnen des Deckelelements (23) einer Hülle (20), das schwenkbeweglich an einem Aufnahmeelement (21) der Hülle (20) gelagert ist und auf dessen Innenseite (24) ein mit einer Haftschicht (31) zum zeitweiligen Fixieren von Etiketten (60) versehenes Trägerelement (30) fixiert ist;
b) Aufbringen eines Etiketts (60) auf die Haftschicht (31) des Trägerelements (30);
c) Einbringen einer zu etikettierenden Compact-Disc (50) in das Aufnahmeelement (21) der Hülle (20);
d) Schließen des Deckelelements (23), so daß das Etikett (60) vom Trägerelement (30) auf die Compact-Disc (50) übertragen wird; und
e) Öffnen des Deckelelements (23) und Entnahme der etikettierten Compact-Disc (50) aus dem Aufnahmeelement (21).

17. Verfahren nach einem der Ansprüche 10 bis 16, dadurch gekennzeichnet, daß als Trägerelement (30) eine Compact-Disc verwendet wird.

18. Verfahren nach einem der Ansprüche 10 bis 17, dadurch gekennzeichnet, daß die Haftschicht zum zeitweiligen Fixieren der Etiketten (60) im wesentlichen auf der gesamten Oberfläche oder in Teilbereichen des Trägerelements (30) ausgebildet ist.

19. Verfahren nach einem der Ansprüche 10 bis 18, dadurch gekennzeichnet, daß die Haftschicht (31) zum zeitweiligen Fixieren der Etiketten (60) in ihrem äußeren und/oder inneren Randbereich eine Markierung (32) aufweist.

20. Verfahren nach einem der Ansprüche 10 bis 19, dadurch gekennzeichnet, daß das Befestigungselement (22) als Spreiz-Klemmelement ausgebildet ist.
